# FASCICULE DE BREVET EUROPEEN

(11) **EP 0 524 116 B1**
(45) Date de publication et mention de la délivrance du brevet: **22.06.1994**
(21) Numéro de dépôt: 92420235.1
(22) Date de dépôt: 10.07.1992
(51) Int. Cl.: D03C 1/14, F16C 7/00

(54) **Mécanisme de tirage à leviers oscillants interposé entre une mécanique d'armure et les cadres de lisses d'un métier à tisser**
Schwinghebelzugmechanismus zwischen Schaftmaschine und Webrahmen einer Webmaschine
Oscillating lever draw mechanism between dobby and healdframes of a loom

(30) Priorité: 15.07.1991 FR 9109116
(43) Date de publication de la demande: 20.01.1993
(73) Titulaire: S.A. DES ETABLISSEMENTS STAUBLI (France), 74210 Faverges (FR)
(72) Inventeur: Froment, Jean-Paul, FR-74210 Doussard (FR); Fumex, André, F-74290 Talloires (FR)
(74) Mandataire: Monnier, Guy

(56) Documents cités:
- EP-A- 0 251 997
- US-A- 1 768 508
- US-A- 5 002 097

## Description

La présente invention a trait aux ratières et autres mécaniques d'armure pour la formation de la foule sur les métiers à tisser, et elle vise plus particulièrement les mécanismes de tirage du type à leviers oscillants qui assurent l'accouplement des organes mobiles d'actionnement d'une telle mécanique avec les cadres de lisses à déplacement vertical montés sur le métier correspondant.

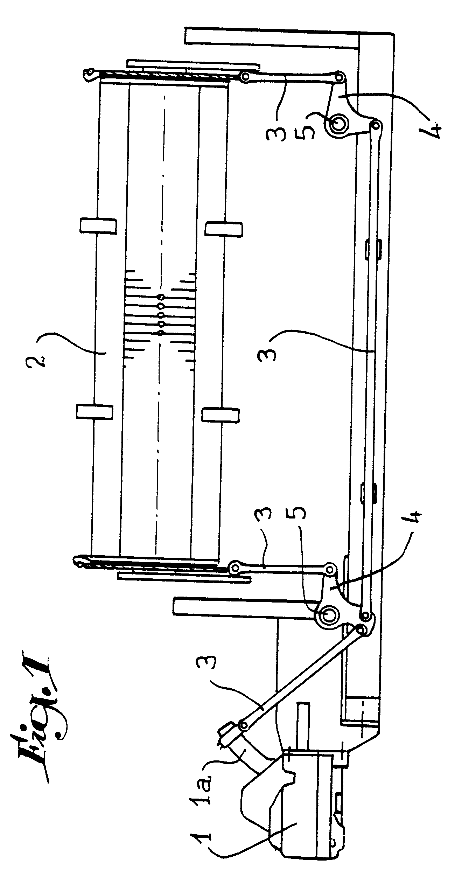

Afin de bien situer les choses, on a très schématiquement rappelé à la fig. 1 du dessin annexé aux présentes l'agencement général d'un mécanisme de tirage du type envisagé. Sur cette figure, la référence 1a désigne l'un des organes d'actionnement d'une ratière 1, tandis que la référence 2 désigne l'un des cadres de lisses montés sur le métier à tisser, et l'on peut constater que pour assurer la liaison articulée entre lesdits éléments 1a et 2, le mécanisme de tirage comprend, au niveau de chaque cadre 2, une série de bielles 3 orientées soit horizontalement, soit verticalement, soit encore obliquement, lesquelles bielles 3 sont attelées les unes aux autres à l'aide de leviers oscillants 4 montés côte à côte le long d'arbres horizontaux fixes 5.

Le graissage nécessaire au libre pivotement des leviers 4 sur leur axe commun 5, comme celui des extrémités des bielles 3 sur lesdits leviers, a toujours posé de sérieux problèmes, principalement dus au fait que les éléments à lubrifier sont placés au ras du sol, au-dessous des cadres de lisses 2, et sont en conséquence peu accessibles, alors qu'ils fonctionnent dans une atmosphère poussiéreuse, remplie de bourres textiles. Pour éviter un arrêt prolongé du métier, on a pour habitude de procéder au graissage par pulvérisation d'un brouillard de lubrifiant au niveau de chacun des ensembles de leviers 4 et l'on conçoit qu'un tel système n'est guère satisfaisant en pratique, par suite du caractère nécessairement approximatif de l'apport de graisse et de la pollution de l'ambiance.

Le document EP-A-0 251 997 (SULZER), qui décrit les caractéristiques du préambule de la revendication 1, montre bien un système de graissage appliqué à la lubrification des leviers oscillants d'un mécanisme de tirage, lequel système fait appel à un perçage qui est ménagé longitudinalement dans l'axe fixe pour alimenter une rainure à profil hélicoïdal pratiquée dans la périphérie de celui-ci en vue d'amener le lubrifiant à la zone de contact des leviers sur ledit axe fixe. Un tel système ne résoud toutefois qu'une partie du problème puisqu'il y a encore lieu de graisser les pivots mobiles portés par chaque levier oscillant pour l'articulation des biellettes de liaison.

C'est à cet inconvénient que la présente invention entend principalement remédier, et ce en dotant les mécanismes de tirage d'un système de graissage parfaitement rationnel dû à son caractère ponctuel, ledit système ne nécessitant toutefois aucun arrêt du métier pour sa mise en oeuvre.

Le mécanisme de tirage suivant l'invention est défini à la revendication 1.

En fait l'invention consiste essentiellement à associer aux leviers oscillants un flasque latéral qui comporte une partie annulaire entourant l'axe fixe de pivotement desdits leviers afin de maintenir une réserve de lubrifiant à ce niveau, réserve de lubrifiant depuis laquelle prend origine au moins un conduit de graissage profilé pour déboucher dans l'un au moins des pivots mobiles d'articulation des bielles sur le levier considéré.

Le dessin annexé, donné à titre d'exemple, permettra de mieux comprendre l'invention, les caractéristiques qu'elle présente et les avantages qu'elle est susceptible de procurer :

Comme indiqué plus haut, fig. 1 expose le type de mécanisme de tirage auquel se réfère l'invention.

Fig. 2 est une vue de côté de l'un des leviers oscillants d'un mécanisme de tirage établi conformément à l'invention, ledit levier étant équipé de son flasque latéral.

Fig. 3, 4 et 5 sont des sections de détail à échelle agrandie, suivant les plans indiqués respectivement en III-III, IV-IV et V-V en fig. 2.

Fig. 6 et 7 sont des vues en perspective montrant les faces d'un levier et d'un flasque qui sont destinées à venir en contact l'une avec l'autre.

Fig. 8 est une coupe axiale illustrant l'assemblage d'une série de leviers équipés de leur flasque.

Fig. 9, 10 et 11 sont des vues et coupe analogues à celles suivant fig. 6, 7 et 3, correspondant à une variante de mise en oeuvre de l'invention.

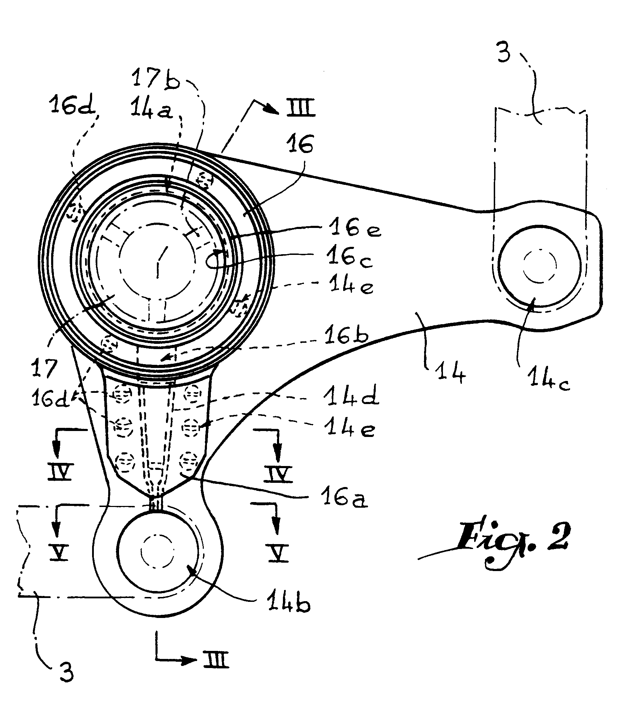

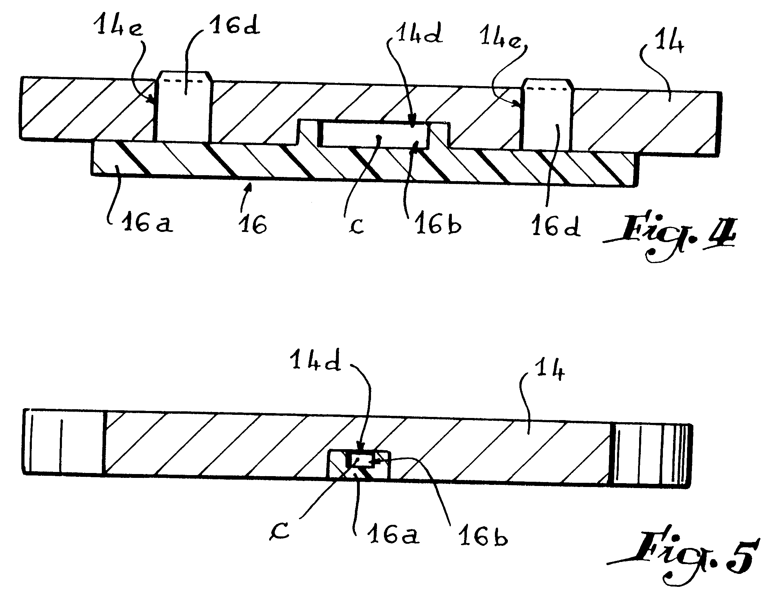

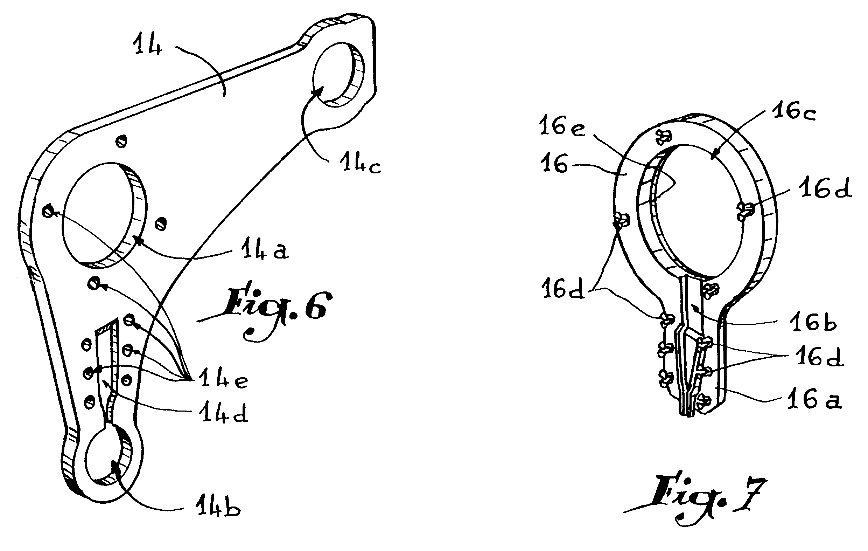

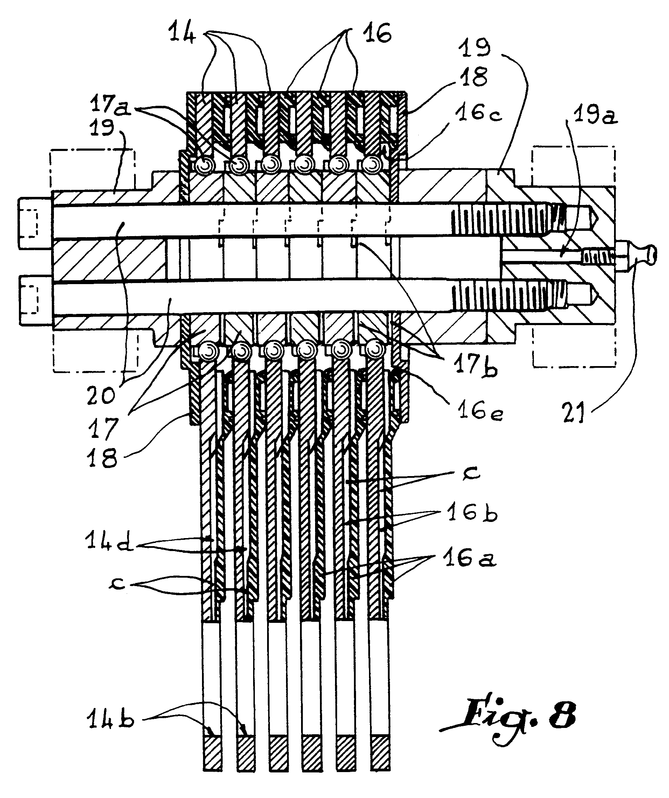

En fig. 2 à 8, la référence 14 désigne un levier métallique comportant deux prolongements ou bras définissant un profil en équerre. Comme plus particulièrement montré en fig. 6, ce levier 14 est découpé d'une ouverture principale 14a et de deux ouvertures secondaires 14b et 14c pratiquées en bout des bras précités en vue de permettre l'attelage des bielles 3. On observera que suivant la ligne qui joint les centres des ouvertures 14a et 14b, l'une des faces opposées du levier 14 est creusée d'une empreinte 14d à profil rectiligne qui s'étend depuis un point situé à une certaine distance de l'ouverture 14a pour déboucher dans l'ouverture 14b.

A chaque levier 14 est associé un flasque 16, avantageusement réalisé en une matière synthétique moulée. Ce flasque 16 comporte une partie principale à profil annulaire, solidaire radialement d'un prolongement rectiligne 16a. L'une des faces de ce flasque 16 comporte, au niveau du prolongement 16a, un profil bombé qui définit une cavité ou empreinte 16b débouchant d'une part dans l'ouverture 16c de la partie principale annulaire du flasque et d'autre part à l'extrémité libre du prolongement 16a.

Le flasque 16 ainsi agencé est destiné à être assemblé au levier 14 sus-décrit, l'empreinte 16b venant coïncider avec l'empreinte 14d. L'assemblage des éléments 14 et 16 peut être obtenu de toute manière appropriée (rivetage, collage, etc...) ; dans la forme de réalisation envisagée, on a supposé que le flasque 16 était pourvu de boutons fendus 16d aptes à venir s'encliqueter élastiquement à l'intérieur de trous 14e prévus à cet effet dans le levier 14.

On conçoit qu'une fois le flasque 16 rendu latéralement solidaire du levier 14, ces deux pièces définissent entre leurs faces en vis-à-vis un conduit c qui relie l'une à l'autre les ouvertures 14a et 14b, la déformabilité de la matière synthétique employée pour la réalisation dudit flasque 16 assurant l'étanchéité du canal précité.

L'ouverture 14a de chaque complexe 14-16 est destinée à recevoir un roulement (fig. 2, 3 et 8) dont les corps roulants 17a sont retenus entre la paroi profilée de l'ouverture 14a précitée et la paroi extérieure d'une bague 17. Il convient de noter que l'une des parois latérales de cette bague 17 est creusée de rainures radiales 17b qui débouchent dans l'ouverture de ladite bague 17 et sur la périphérie de celleci.

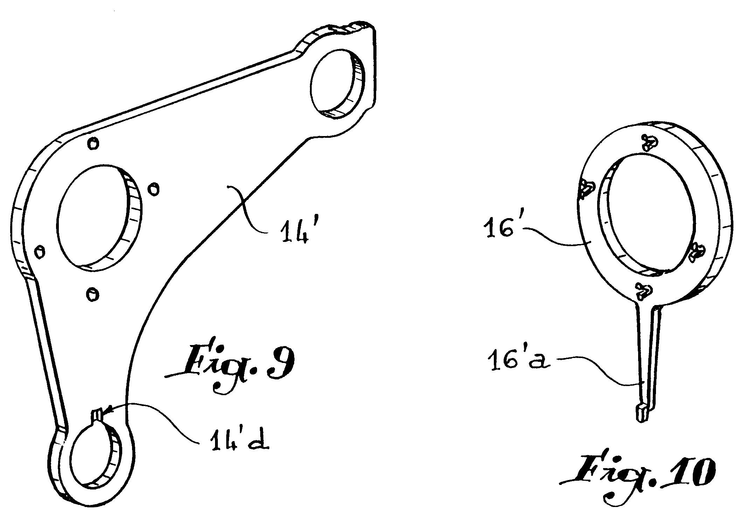

L'ensemble des complexes 14-16 équipés de leur roulement 17-17a est monté entre deux rondelles 18 (fig. 8) qui sont maintenues entre deux embouts 19 assemblés l'un à l'autre au moyen de tirants filetés 20, lesquels sont introduits dans l'ouverture des bagues 17. L'un des deux embouts 19 est creusé d'un canal axial 19a dans le débouché extérieur duquel est vissé un graisseur 21 de type usuel.

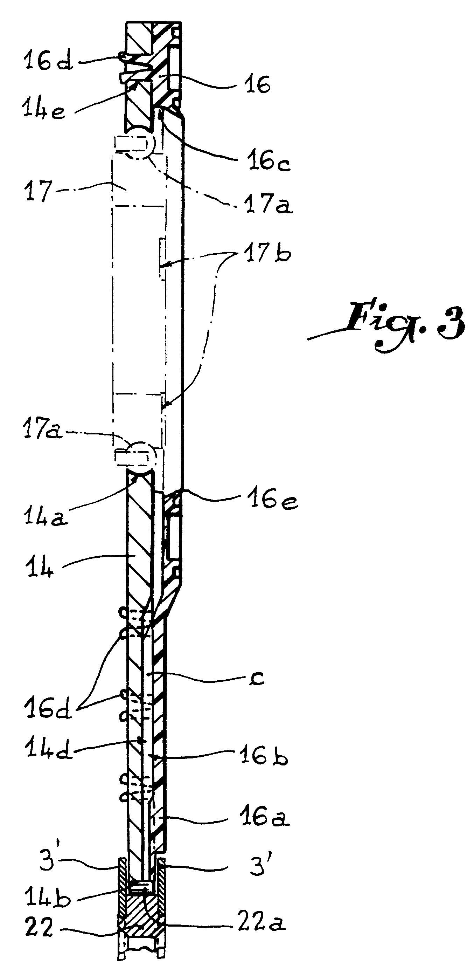

On comprend sans peine que cette structure correspond en fait à celle d'un axe creux dont l'espace intérieur, défini par les ouvertures des bagues 17, est susceptible d'être rempli de lubrifiant. Ce dernier peut traverser les entailles radiales 17b pour accéder au débouché du conduit c sus-mentionné et, de là, jusqu'à l'ouverture 14b de chaque levier 14 en vue d'assurer le graissage du pivot destiné à l'attelage de la bielle 3 correspondante. On observera que le prolongement 16a du flasque 16 et l'empreinte 14d sont profilés de façon à ce que l'extrémité du conduit c débouche directement contre les corps roulants 22a du roulement 22 assurant le montage pivotant de la bielle 3 envisagée, entre les deux tôles parallèles 3′ qui forment ladite bielle, le tout comme illustré en fig. 3.

La lubrification est ainsi opérée dans d'excellentes conditions jusqu'au point désiré. L'espace intérieur défini par les bagues 17 entre les embouts 19 constitue une réserve de lubrifiant dont le volume peut être calculé de façon à réduire la fréquence des remplissages, ces opérations étant au surplus susceptibles d'être aisément effectuées à travers le graisseur 21 sans nécessiter l'arrêt du métier par suite de la fixité dudit graisseur ; on notera d'ailleurs que le remplissage est susceptible d'être effectué de manière automatique et en continu, en ayant recours à une distribution centralisée.

Il va de soi que chaque flasque 16 peut comporter plusieurs prolongements 16a orientés les uns par rapport aux autres de manière à définir des conduits c aptes à assurer la lubrification de tous les pivots destinés à l'attelage des bielles 3 associées au même levier 14. De la même manière, l'extrémité du prolongement 16a de certains au moins des flasques 16 et l'empreinte 14d du levier 14 sont susceptibles de présenter un profil en Y afin d'être en mesure de lubrifier les pivots prévus côte à côte sur un même bras de chaque levier concerné (cas du levier oscillant de gauche dans l'exemple de réalisation envisagé en fig. 1).

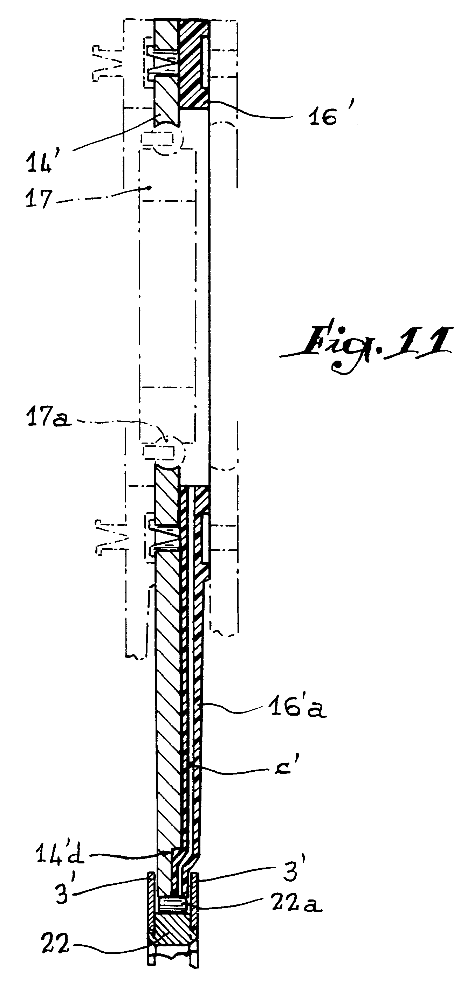

Dans la variante illustrée en fig. 9 à 11, chaque prolongement radial 16′a des flasques 16′ est établi à une section transversale fermée de façon à ce que le conduit c′ y soit intégralement défini. Une fois chaque flasque 16′ fixé contre la paroi latérale d'un levier 14′, l'extrémité libre, repliée à la manière d'un bec pour assurer le graissage des corps roulants 22a du roulement 22, vient s'engager dans une dépression 14′d dudit levier, tandis que la partie annulaire de ce flasque constitue, avec le levier 14′ adjacent, une chambre étanche qui communique avec le réserve de lubrifiant ménagée entre les tirants 20.

On observera qu'aux lieu et place de ces tirants, on peut avoir recours, pour l'assemblage des complexes mobiles 14-16 ou 14′-16′, à un axe plein, la réserve de lubrifiant étant alors constituée par l'espace libre des parties annulaires des flasques 16 ou 16′ qui communiquent entre elles à travers les cages des roulements 17-17a. On notera en outre que les parois latérales des flasques 16 ou 16′ sont avantageusement munies de lèvres déformables d'étanchéité du genre de celle qui a été représentée en 16e en fig. 3 ; ces lèvres sont propres, par écrasement, à éviter toute fuite de lubrifiant en dehors de la réserve centrale et des canaux c.

## Revendications

1. Mécanisme de tirage interposé entre une mécanique d'armure (1) et les cadres de lisses (2) montés sur le métier à tisser correspondant, du genre comprenant une série de bielles (3) attelées les unes aux autres à l'aide de leviers oscillants (14), et comportant un système de graissage appliqué à la lubrification des leviers (14), caractérisé en ce qu'à certains au moins des leviers (14) est associé un flasque latéral (16) qui comporte une partie annulaire délimitant une cavité entourant l'axe fixe de pivotement (19-17-19) desdits leviers afin de maintenir une réserve de lubrifiant à ce niveau, réserve de lubrifiant depuis laquelle prend origine au moins un conduit de graissage (c) profilé pour déboucher dans l'un au moins des pivots mobiles d'articulation des bielles (3) sur le levier considéré.

2. Mécanisme suivant la revendication 1, caractérisé en ce que la partie annulaire du flasque (16) est radialement solidaire d'au moins un prolongement rectiligne (16a) qui s'étend en direction de l'un des pivots mobiles d'articulation.

3. Mécanisme suivant la revendication 2, caractérisé en ce que le conduit (c) est défini par une empreinte (14d, 16b) ménagée dans l'une au moins des parois en vis-à-vis du levier et du prolongement radial (16a) de son flasque.

4. Mécanisme suivant la revendication 2, caractérisé en ce que le conduit de graissage (c′) est intégralement défini à l'intérieur du prolongement radial (16′a) de chaque flasque (16′), ladite partie présentant en section transversale un profil fermé sur lui-même.

5. Mécanisme suivant l'une quelconque des revendications 1 à 4, caractérisé en ce que l'axe de pivotement des leviers (14) est constitué par l'assemblage côte à côte des bagues d'une série de roulements (17-17a) engagés dans l'ouverture principale (14a) des leviers (14), lesquelles bagues sont assemblées les unes aux autres à l'aide de tirants filetés (20).

6. Mécanisme suivant la revendication 5, caractérisé en ce que les bagues (17) sont serrées entre deux embouts (19) dont l'un au moins est creusé d'un canal (19a) équipé d'un graisseur usuel (21) pour l'introduction de lubrifiant dans l'espace intérieur ménagé entre lesdites bagues.

7. Mécanisme suivant l'une quelconque des revendicatioons 3 à 6, caractérisé en ce que le prolongement radial (16a, 16′a) est conformé pour que le conduit (c, c′) débouche au niveau des corps roulants (22a) du roulement (22) qui assure le montage articulé de la bielle (3) sur le levier (14) envisagé.

8. Mécanisme suivant l'une quelconque des revendications 3 à 7, caractérisé en ce que le levier (14′) comporte, au niveau de l'ouverture (14b, 14c) destinée au montage d'une bielle (3), au moins une dépression (14′d) apte à recevoir l'extrémité libre repliée ou bec du prolongement radial (16′a) du flasque (16), afin d'amener le lubrifiant au contact des corps roulants (22a) du roulement (22).

9. Mécanisme suivant l'une quelconque des revendications 3 à 8, caractérisé en ce que le flasque (16) est pourvu, au niveau de sa partie principale annulaire, d'au moins une lèvre d'étanchéité (16e).

10. Mécanisme suivant l'une quelconque des revendications 1 à 9, caractérisé en ce que le flasque (16) est pourvu de boutons (16d) aptes à venir se fixer dans des trous (14e) du levier (14) pour assurer l'assemblage de ce dernier et de son flasque.

11. Mécanisme suivant la revendication 10, caractérisé en ce que les boutons (16d) sont fendus axialement pour se verrouiller par clipsage élastique dans les trous (14e) du levier (14).

## Patentansprüche

1. Zugmechanismus zwischen einer Fachbildemaschine (1) und den Schaftrahmen, die auf einer entsprechenden Webmaschine montiert sind, von der Art, die eine Reihe von Treibstangen (3) umfaßt, die mittels Schwinghebeln (14) aneinander gekoppelt sind und ein Schmiersystem umfassen, das zur Schmierung der Hebel (14) verwendet wird, dadurch gekennzeichnet, daß wenigstens an bestimmten Hebeln (14) ein lateraler Flansch (16) befestigt ist, der einen ringförmigen Bereich umfaßt, der einen Hohlraum umgibt, der die feste Drehachse (19-17-19) der Hebel umgibt, um auf dieser Höhe eine Reserve an Schmiermittel zu halten, von welcher Reserve aus wenigstens eine Schmiermittelführung (c) ausgeht, die geformt ist, um in wenigstens der einen der beweglichen Gelenkverbindungen der Treibstangen (3) auf der betrachteten Treibstange zu münden.

2. Mechanismus nach Anspruch 1, dadurch gekennzeichnet, daß der ringförmige Bereich des Flanschs (16) radial wenigstens an einer geradlinigen Verlängerung (16a) befestigt ist, die sich in Richtung der einen der beweglichen Gelenkverbindungen erstreckt.

3. Mechanismus nach Anspruch 2, dadurch gekennzeichnet, daß die Führung (c) von einer Vertiefung (14d, 16b) gebildet wird, die wenigstens in die eine der Wände gegenüber dem Hebel und der radialen Verlängerung (16a) seines Flanschs geformt ist.

4. Mechanismus nach Anspruch 2, dadurch gekennzeichnet, daß die Schmiermittelführung (c′) integral im Inneren der radialen Verlängerung (16′a) jedes Flanschs (16′) gebildet ist, wobei der Bereich im transversalen Querschnitt ein in sich geschlossenes Profil aufweist.

5. Mechanismus nach einem der Ansprüche 1 bis 4, dadurch gekennzeichnet, daß die Drehachse der Hebel (14) aus Nebeneinanderanordnung der Ringe einer Reihe von Rollagern (17-17a) geformt ist, die in die Hauptöffnung (14a) der Hebel (14) gesteckt sind, wobei die Ringe mit Stehbolzen (20) aneinander befestigt sind.

6. Mechanismus nach Anspruch 5, dadurch gekennzeichnet, daß die Ringe (17) zwischen zwei Ansatzstücke (19) geklemmt sind, von denen wenigstens eines von einem Kanal (19a) durchzogen wird, der mit einer üblichen Schmiervorrichtung (21) zum Einführen von Schmiermittel in den inneren, zwischen den Ringen geformten Raum, ausgerüstet ist.

7. Mechanismus nach einem der Ansprüche 3 bis 6, dadurch gekennzeichnet, daß die radiale Verlängerung (16a, 16a′) so geformt ist, daß die Führung (c, c′) auf der Höhe der Rollkörper (22a) des Rollagers (22) mündet, das die gelenkige Montage der Treibstange (3) auf dem betrachteten Hebel (14) sicherstellt.

8. Mechanismus nach einem der Ansprüche 3 bis 7, dadurch gekennzeichnet, daß der Hebel (14′) auf der Höhe der Öffnung (14b, 14c), die zur Montage einer Treibstange (3) bestimmt ist, wenigstens eine Vertiefung (14′d) umfaßt, die zur Aufnahme des freien, umgefalzten oder Schnabelendes der radialen Verlängerung (16′a) des Flansches geeignet ist, um das Schmiermittel in Kontakt mit den Rollkörpern (22a) des Rollagers (22) zu bringen.

9. Mechanismus nach einem der Ansprüche 3 bis 8, dadurch gekennzeichnet, daß der Flansch (16) auf der Höhe seines ringförmigen Hauptbereichs mit wenigstens einer Dichtungslippe (16e) versehen ist.

10. Mechanismus nach einem der Ansprüche 1 bis 9, dadurch gekennzeichnet, daß der Flansch (16) mit Knöpfen (16d) versehen ist, die geeignet sind, sich in Löchern (14e) im Hebel (14) festzusetzen, um die Verbindung desselben mit seinem Flansch sicherzustellen.

11. Mechanismus nach Anspruch 10, dadurch gekennzeichnet, daß die Knöpfe (16d) axial gespalten sind, damit sie sich durch elastisches Verklemmen in den Löchern (14e) des Hebels verriegeln.

## Claims

1. Drawing mechanism interposed between a weaving mechanism (1) and the heddle frames (2) mounted on the corresponding weaving loom, of the type comprising a series of connecting rods (3) coupled to one another with the aid of rocking levers (14), and comprising a greasing system applied to the lubrication of the levers (14), characterized in that, with at least certain of the levers (14) there is associated a lateral plate (16) which comprises an annular part defining a cavity surrounding the fixed pivot pin (19-17-19) of said levers in order to maintain a reserve of lubricant at that level, from which reserve of lubricant at least one greasing conduit (c) originates, profiled to open out in at least one of the mobile articulation pivots of the connecting rods (3) on the lever in question.

2. Mechanism according to Claim 1, characterized in that the annular part of the plate (16) is radially fast with at least one rectilinear extension (16a) which extends in the direction of one of the mobile articulation pivots.

3. Mechanism according to Claim 2, characterized in that the conduit (c) is defined by an impression (14d, 16b) made in at least one of the walls opposite the lever and the radial extension (16a) of its plate.

4. Mechanism according to Claim 2, characterized in that the greasing conduit (c′) is integrally defined within the radial extension (16′a) of each plate (16′), said part presenting in transverse section a profile closed on itself.

5. Mechanism according to any one of Claims 1 to 4, characterized in that the pivot pin of the levers (14) is constituted by the side-by-side assembly of the rings of a series of roller bearings (17-17a) engaged in the principal opening (14a) of the levers (14), which rings are assembled on one another with the aid of threaded tie-rods (20).

6. Mechanism according to Claim 5, characterized in that the rings (17) are tightened between two connectors (19) of which at least one has a channel (19a) hollowed out therein, equipped with a conventional lubricator (21) for the introduction of lubricant in the inner space made between said rings.

7. Mechanism according to any one of Claims 3 to 6, characterized in that the radial extension (16a, 16′a) is shaped so that the conduit (c, c′) opens out at the level of the rolling bodies (22a) of the roller (22) which ensures articulated assembly of the connecting rod (3) on the lever (14) envisaged.

8. Mechanism according to any one of Claims 3 to 7, characterized in that the lever (14′) comprises, at the level of the opening (14b, 14c) intended for the assembly of a connecting rod (3), at least one depression (14′d) adapted to receive the bent free end or beak of the radial extension (16′a) of the plate (16), in order to bring the lubricant into contact with the rolling bodies (22a) of the roller (22).

9. Mechanism according to any one of Claims 3 to 8, characterized in that the plate (16) is provided, at the level of its principal annular part, with at least one sealing lip (16e).

10. Mechanism according to any one of Claims 1 to 9, characterized in that the plate (16) is provided with buttons (16d) adapted to be fixed in holes (14e) in the lever (14) in order to ensure assembly of this latter and its plate.

11. Mechanism according to Claim 10, characterized in that the buttons (16d) are split axially in order to lock by elastic clipping in the holes (14e) in the lever (14).
